Europäisches Patentamt

European Patent Office

Office européen des brevets

(19)

(11) Numéro de publication: **0 141 241**
**B1**

(12) **FASCICULE DE BREVET EUROPEEN**

(45) Date de publication du fascicule du brevet: **18.05.88**

(51) Int. Cl.⁴: **H 04 L 11/16**

(21) Numéro de dépôt: **84111397.0**

(22) Date de dépôt: **25.09.84**

(54) **Procédé et dispositif de selection d'une station d'un ensemble de stations dialoguant avec une station principale.**

(30) Priorité: **27.09.83 FR 8315294**

(43) Date de publication de la demande:
**15.05.85 Bulletin 85/20**

(45) Mention de la délivrance du brevet:
**18.05.88 Bulletin 88/20**

(84) Etats contractants désignés:
**BE CH DE FR GB IT LI NL SE**

(56) Documents cités:
**EP-A-0 052 956**
**EP-A-0 096 097**
**US-A-3 978 451**
**US-A-4 199 662**
**IBM TECHNICAL DISCLOSURE BULLETIN, vol. 18, no. 4, septembre 1975, page 1131, New York, USA; J.L. DELLHEIM et al.: "Polling method using subgroups of polled stations"**

**ELECTRONIC ENGINEERING, vol. 50, no. 606, mai 1978, pages 41-43, Londres, GB; C. MOLLER: "A simple data bus for low data rates"**

(73) Titulaire: **ALCATEL CIT**
**33, rue Emeriau**
**F-75015 Paris (FR)**

(72) Inventeur: **Henaff, Bernard**
**Rue de la Roseraie Ploubezre**
**F-22300 Lannion (FR)**

(74) Mandataire: **Weinmiller, Jürgen et al**
**Lennéstrasse 9 Postfach 24**
**D-8133 Feldafing (DE)**

(56) References cited:
**ELECTRICAL COMMUNICATION, vol. 56, no. 1, 1981, pages 17-30, New York, USA; E.A. SMITH et al.: "Impact of non-voice services on network evolution"**

Courier Press, Leamington Spa, England.

EP 0 141 241 B1

# Description

L'invention concerne la sélection d'une station d'un ensemble de stations dialoguant avec un station principale à laquelle elles sont reliées par une liaison multiplex constituée par au moins une ligne multiplex pour chaque sens de communication, le dialogue consistant en un échange de messages transmis dans une voie temporelle réservée de chaque trame des lignes multiplex qui acheminent des informations sous forme d'impulsions codées contenues dans des voies d'une trame; généralement la trame a une durée de 125 microseconds et est divisée en 32 intervalles de temps dits voies temporelles.

Dans un réseau de communications de type centralisé les stations sont des unités terminales reliées à un certain nombre d'abonnés et reliées à une unité de commande équipée d'une station principale qui consulte lesdites stations, cette unité de commande étant elle-même reliée au central de télécommunication par une liaison multiplex.

Les stations dialoguent avec la station principale par une voie réservée dans les trames des lignes multiplex et la voie réservée au dialogue avec la station principale peut être l'une quelconque des 32 voies de la trame. Il ne peut y avoir plusieurs stations qui dialoguent en même temps avec la station principale; il est donc nécessaire que les stations partagent la voie réservée afin de dialoguer l'une après l'autre.

Les méthodes de partage dynamique d'une voie réservée sont de deux types: méthode par compétition et méthode par élection.

Dans la méthode de partage dynamique par compétition chaque station envoie librement ses messages sans demande préalable et sans se soucier des autres stations. L'inconvénient majeur réside dans la collision des messages qui s'en trouvent ainsi altérés. Ce phénomène oblige à des répétitions qui augmentent en fonction de la charge et du nombre de stations, d'où un manque d'efficacité par une limitation sévère du débit. Pour prévenir partiellement ces collisions tout en conservant le principe de la compétition, on a recours soit à la discrétisation du temps, c'est-à-dire que chaque station émettrice doit attendre le début d'un intervalle de temps pour émettre un message, soit à la méthode d'écoute qui s'appuie sur deux mécanismes: la détection de voie libre (écoute avant d'émettre), et la détection de collision (écoute pendant l'émission). Ces deux dernières solutions entrainent un surcoût en matériel et en logiciel au niveau de chaque station ainsi qu'une implémentation difficile d'un contrôle d'activité de chacune des stations.

Dans la méthode par élection, l'élection d'une station peut se faire soit par consultation soit par sélection centralisée. Dans l'élection par consultation toutes les stations sont interrogées dans un ordre fixe; lors de la rencontre d'une station prête à émettre, celli-ci est élue et la consultation s'arrête; une fois le message émis la consultation reprend. Cette méthode présente les inconvénients d'un temps d'exploration qui croit avec le nombre de stations, et d'un ordre de service sans rapport avec l'ordre des demandes.

Dans l'élection centralisée un arbitre mémorise les requêtes des différentes stations et procède à l'élection. Les inconvénients résident dans la complexité de l'arbitre et dans le fait que les requêtes sont aussi des messages qui doivent être transmis sur une voie spécialisée.

Dans le brevet US—A—4 199 662 les échanges entre une unité centrale et des groupes de stations se font selon deux procédés. Les messages d'état des groupes de stations sont transmis en mode synchrone dans un multiplex à division du temps, et les messages d'informations sont émis en mode asynchrone. Il n'est pas indiqué comment est réglé le conflit, dans le groupe, entre deux stations désirant émettre.

Le document IBM Technical Disclosure Bulletin, volume 18, numéro 4, 1975, page 1131, concerne la sélection d'une station d'un sous-groupe de stations. Selon cet article une station de base interroge un sous-groupe de stations; les stations du sous-groupe sont adressées par une seule adresse dans le message de scrutation; si aucune station ne répond, la station de base interroge un autre sous-groupe. Si deux ou plusieurs stations d'un sous-groupe répondent, la station de base émet un message pour ordonner à chaque station de cesser son émission. Ensuite la station de base règle le conflit à l'aide d'un message dans lequel chaque station est adressée individuellement.

L'invention a pour but la sélection d'une station permettant, par rapport aux méthodes connues, une économie importante du matériel sur chaque station, tout en conservant de bonnes performances de communication c'est-à-dire en limitant l'influence du nombre de stations sur le débit et en tenant compte de l'antériorité des demandes.

Ce but est atteint par le procédé et le dispositif tels qu'ils sont définis dans les revendications 1 et 2.

La sélection d'une station est donc obtenue, selon l'invention, par la réalisation d'un compromis entre la méthode par élection et la méthode par compétition. Ce compromis est basé sur le fait que les stations sont regroupées pour constituer des groupes qui sont reliés à la station principale, et que le débit des informations échangées avec la station principale est faible. Le regroupement des stations permet de réaliser, dans chaque groupe, un dispositif simple pour le partage de la voie de communication entre les stations du groupe. Le faible débit des informations autorise, dans la station principale, le partage du matériel de communication entre plusieurs groupes, L'invention permet donc de cumuler l'avantage d'une sélection distribuée d'une station dans un groupe, par compétition dans ce groupe, avec l'avantage de la sélection d'un groupe par la station principale, et ceci sans faire appel à un matériel important.

D'autre part le matériel de la station principale étant partagé par toutes les stations des groupes, l'invention permet également une économie de matériel dans la station principale.

L'invention va être décrite à l'aide d'un exemple de réalisation illustré par les figures annexées dans lesquelles

la figure 1 représente le schéma général de la structure d'un réseau de communication sur lequel l'invention est appliquée;

la figure 2 représente un groupe de stations de la figure 1 et le dispositif de l'invention;

la figure 3 représente le schéma de la station principale de la figure 1;

la figure 4 représente un dispositif d'allocation de la station de la figure 3;

la figure 5 représente l'algorithme exécute par chaque station pour s'allouer la voie réservée.

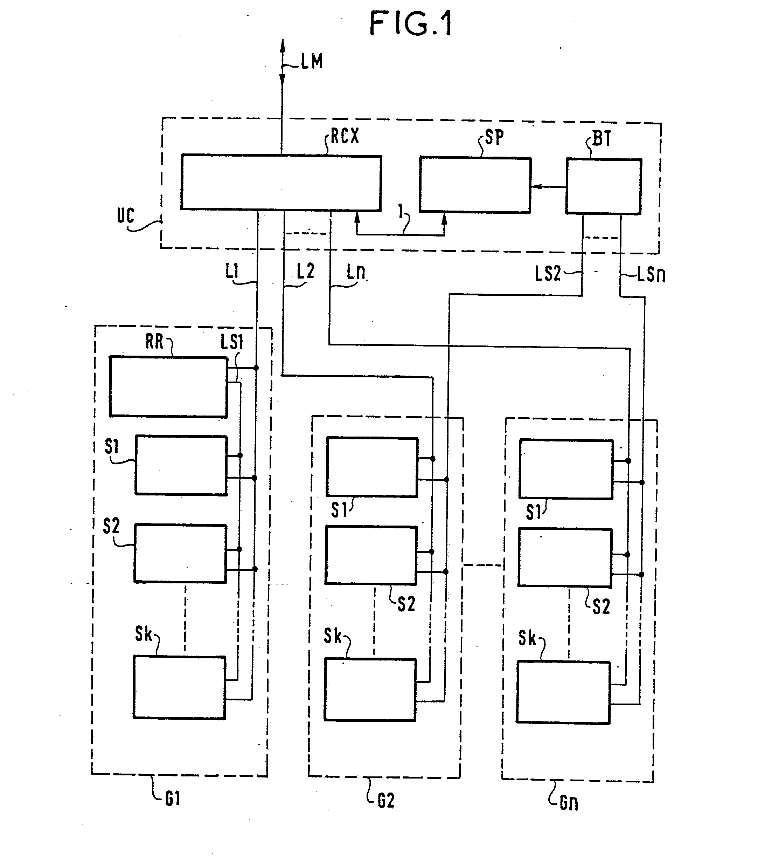

Dans la figure 1, qui représente le schéma général de la structure d'un réseau de télécommunication sur lequel l'invention est appliquée, des groupes de stations G1, G2 . . . Gn sont reliés à une unité de commande UC par des liaisons multiplex bidirectionnelles L1, L2 . . . Ln, respectivement. Chaque groupe est constitué de stations S1, S2 . . . Sk reliées en parallèle à la liaison multiplex reliant le groupe à l'unité de commande. Les stations sont reliées chacune à des abonnés, chaque groupe constituant un concentrateur. Le groupe G1 est par exemple un concentrateur distant, les groupes G2 à Gn étant des concentrateurs locaux c'est-à-dire implantés à côté de l'unité de commande. Du fait de son éloignement le groupe G1 comporte un dispositif de récupération de rythme RR relié à la liaison multiplex L1 et distribuant des signaux d'horloge récupérés et un signal de synchronisation aux stations S1 à Sk par une liaison de signaux d'horloge LS1. L'unité de commande UC comporte un réseau de connexion RCX, une station principale SP et une base de temps BT. Le réseau de connexion est relié d'une part aux groupes par les liaisons multiplex L1, L2, . . . Ln, et d'autre part au central par une liaison multiplex bidirectionnelle LM constituée de plusieurs lignes multiplex. La station principale SP est reliée au réseau de connexion par une liaison multiplex 1 bidirectionnelle permettant d'échanger des messages avec les stations des groupe. La base de temps BT délivre les signaux d'horloge et de synchronisation nécessaires au fonctionnement de l'unité de commande et des groupes G2 à Gn qui sont des groupes locaux; elle est donc reliée aux groupes G2 à Gn par des liaisons de signaux d'horloge LS2 à LSn, respectivement. Bien entendu le réseau de communication peut comporter plus d'un groupe distant, ou ne pas en comporter du tout.

Les échanges de messages entre la station principale et chaque groupe de stations se font par l'intermédiaire d'une voie réservée de la liaison multiplex reliant le groupe à la station principale, et plus précisément sur chacune des lignes multiplex de la liaison multiplex, cette voie réservée ayant un débit de 64 kbit/s. Les messages échangés sur cette voie réservée, le sont suivant une procédure de type HDLC définie par le CCITT, la sélection d'une station dans un groupe se faisant par compétition dans le groupe, la station ainsi sélectionnée émettant dès réception du message de consultation émis par la station principale à destination du groupe, ce message étant diffusé à toutes les stations du groupe. les échanges sur la voie réservée s'effectuent en mode bidirectionnel alterné suivant un principe maitre esclave où la station principale consulte les stations par diffusion d'une trame de consultation, et ce groupe après groupe.

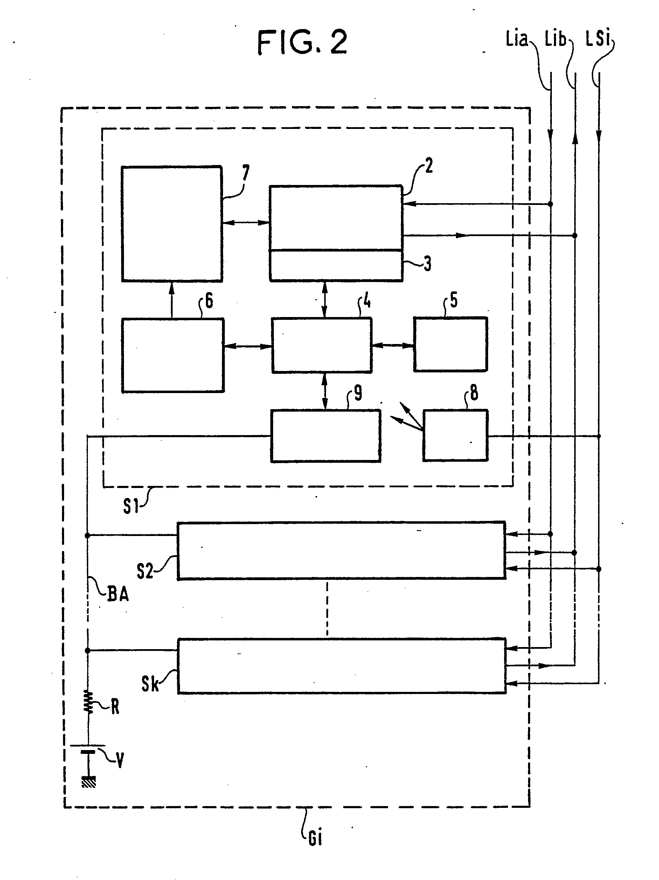

La figure 2 représente un groupe de stations Gi de la figure 1, comportant chacune le dispositif de l'invention permettant la sélection d'une station dans un groupe. Chaque station, de type connu par exemple par la demande française publiée 2.513.470 "Groupe d'unités de terminaux pour autocommutateur numérique", comporte un circuit d'extraction et d'injection de voie temporelle 2, un contrôleur 3 qui est un circuit d'émission réception fonctionnant en procédure HDLC, un microprocesseur 4, une mémoire 5, un circuit d'échange 6, un groupe de terminaux 7 et un circuit d'interface 8 relié à la liaison de signaux d'horloge LSi, ce circuit d'interface distribuant les signaux d'horloge et de synchronisation aux différents organes de la station. Le circuit d'extraction et d'injection de voies temporelles 2 est relié à des liaisons multiplex de réception Lia et d'émission Lib qui constituent la liaison multiplex Li reliant la station à l'unité de commande, chaque liaison multiplex de réception et d'émission pouvant comporter plusieurs lignes multiplex, de une à quatre par exemple. Conformément à l'invention, chaque station S1 à Sk comporte un dispositif d'allocation 9 relié à un bus d'auto-allocation BA commun à toutes les stations S1 à Sk du groupe de stations Gi. Le bus d'autoallocation BA est relié à travers une résistance R au pôle positif d'une source de tension V dont le pôle négatif est à la masse. Dans chaque station le dispositif d'allocation 9 est relié au microprocesseur 4.

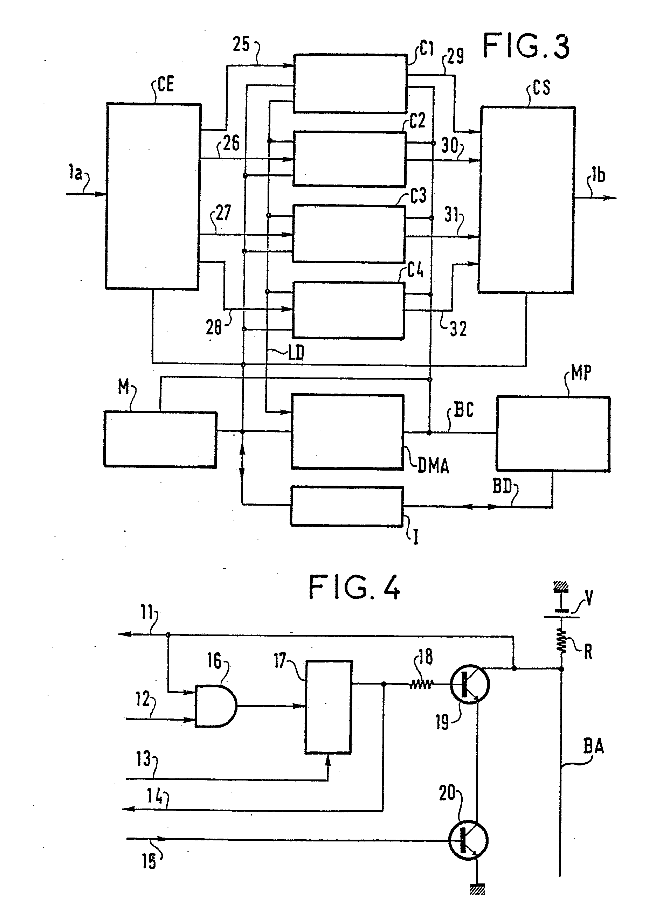

La figure 3 représente, à titre d'exemple, le schéma de la station principale SP de l'unité de commande UC de la figure 1. Un circuit d'entrée CE est relié par une liaison multiplex entrante 1a au réseau de connexion RCX de l'unité de commande UC, et un circuit de sortie CS est relié par une liaison multiplex sortante 1b au réseau de connexion RCX de l'unité de commande UC; les liaisons multiplex entrante 1a et sortante 1b constituant la liaison multiplex bidirectionnelle 1 de la figure 1.

Quatre contrôleurs C1 à C4, qui sont des contrôleurs série de communication, par exemple du type 8530 commercialisé par AMD, sont reliés en entrée par quatre lignes multiplex entrantes 25, 26, 27, 28, respectivement, au circuit d'entrée CE; ils sont également reliés en sortie par quatre lignes multiplex sortantes 29, 30, 31, 32, respectivement, au circuit de sortie CS.

La station principale comporte également un circuit accès direct mémoire DMA, une mémoire M, un microprocesseur MP et un circuit interface I. Le microprocesseur MP est relié par un bus de données BD et à travers le circuit interface I, à la mémoire M, au circuit accès direct mémoire DMA, aux contrôleurs C1 à C4, au circuit d'entrée CE et au circuit de sortie CS; le microprocesseur MP est également relié par un bus de commande BC aux contrôleurs C1 à C4, au circuit accès direct mémoire DMA et à la mémoire M. Chaque contrôleur est également relié au circuit accès direct mémoire DMA par une liaison de demande LD.

La liaison multiplex entrante 1a est constituée de plusieurs lignes multiplex et le circuit d'entrée CE réalise une commutation spatiale et temporelle entre ces lignes multiplex et les lignes multiplex entrantes 25 à 28; de même la liaison multiplex sortante 1b est constituée de plusieurs lignes multiplex et le circuit de sortie CS réalise une commutation spatiale et temporelle entre les lignes multiplex sortantes 29 à 32 et les lignes multiplex de la liaison multiplex sortante 1b.

Les messages provenant d'une station par la liaison multiplex entrante 1a sont traités dans un des contrôleur C1 à C4, et les messages à destination d'un groupe, ou d'une station, sont traités par un des contrôleurs C1 à C4 et émis sur la liaison multiplex sortante 1b.

La figure 4 représente le dispositif d'allocation 9 de la figure 2 qui équipe chaque station et comporte, une porte ET 16, une bascule 17, une résistance 18 et deux transistors 19 et 20. La porte ET 16 est reliée en sortie à l'entrée de la bascule 17, de type D, dont la sortie est reliée par la résistance 18 à la base du transistor 19. Le transistor 19 a son collecteur relié au bus d'auto-allocation BA et son émetteur relié au collecteur du transistor 20 dont l'émetteur est relié à la masse; le collecteur du transistor 19 est également relié à une entrée de porte ET 16 et par une ligne d'état de bus 11 au microprocesseur de la station qui est également relié par: une ligne de demande 12 à une autre entrée de la porte ET 16, une ligne de libération 13 à une entrée de remise à zéro de la bascule 17, une ligne d'état 14 à la sortie de la bascule 17, une ligne de blocage 15 à la base du transistor 20.

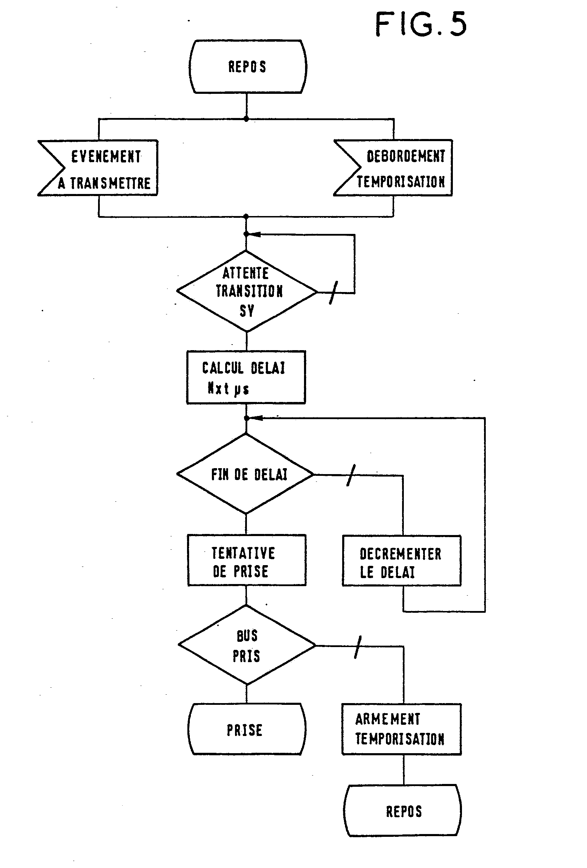

Lorsqu'une station Si d'un groupe Gi désire réserver la voie réservée de la liaison multiplex d'émission son microprocesseur 4 déroule l'algorithme représenté figure 5 pour effectuer une tentative de prise du bus d'auto-allocation par envoi d'un signal sur la ligne de demande 12 à la porte ET 16; celle-ci reçoit sur une entrée un signal d'état du bus de valeur 1 si le bus d'auto-allocation BA est libre et un signal de valeur 0 si le bus est occupé. Si une autre station a pris le bus, la porte ET est inhibée et la demande est bloquée au niveau de la porte ET. Si le bus est libre la porte ET délivre un signal à la bascule 17 qui change d'état et délivre un signal sur la base du transistor 19, ce signal rendant le transistor 19 passant. Le transistor 20 reçoit normalement par la ligne de blocage 15 un signal de commande qui le rend passant; en cas de défaillance interne de la station la base du transistor 20 reçoit un signal qui bloque le transistor 20 qui bloque lui même le transistor 19 puisque les deux transistors sont en série. Ainsi, lorsque la station n'est pas défaillante, le transistor 20 est passant et lorsque le transistor 19 est passant, le bus d'auto-allocation BA est pratiquement porté à la masse à travers les jonctions collecteur-émetteur des transistors 19 et 20. Le bus d'auto-allocation étant ainsi mis à la masse, aucune autre station du groupe ne peut prendre le bus d'auto-allocation puisque la porte ET 16 de son dispositif d'allocation est inhibée. Dans la station qui a pris le bus d'auto-allocation l'état du bus est transmis, par la ligne d'état de bus 11, au microprocesseur qui constate le changement d'état du bus, et qui reçoit également par la ligne d'état 14 l'état de la bascule 17 afin de confirmer que le changement d'état du bus résulte bien du changement d'état de la bascule, donc de la demande de prise émise sur la ligne de demande 12.

Le microprocesseur étant ainsi informé que le changement d'état du bus d'auto-allocation résulte de sa demande de prise, commandera l'émission du message sur la liaison multiplex d'émission Lib qui relie le groupe à la station principale, dès qu'il recevra un message de consultation de la station principale par la liaison multiplex de réception Lia. Dans le groupe le message de consultation est diffusé à toutes les stations, puisque celles-ci sont reliées à la liaison multiplex de réception Lia, mais seule la station ayant pris le bus d'auto-allocation BA émettra un message sur la liaison multiplex d'émission Lib, dans la voie réservée de la trame de cette liaison multiplex. A la fin de l'échange de message avec la station principale le microprocesseur délivre par la ligne de libération 13 un signal de libération qui remet la bascule 17 à zéro, ce qui libère le bus d'auto-allocation BA.

Le but de l'algorithme représenté figure 5 est d'attribuer à chacune des stations dans une trame de 125 microsecondes, un intervalle de temps déterminé, fonction de l'adresse de la station dans le groupe; la trame est délimitée par le signal de synchronisation acheminé par les liaisons de signaux d'horloge LS1 à LSn. Cet intervalle de temps affecté à chaque station évite les conflits entre stations d'un groupe, en permettant de séparer les tentatives de prise du bus d'auto-allocation BA du groupe. Lorsqu'une station veut émettre un message, le microprocesseur déroule l'algorithme qui commence par une attente du passage du signal de synchronisation; la première transition de celui-ci arme une temporisation initialisée à N.t. microsecondes, N étant l'adresse de la station dans le groupe, et t ayant une valeur minimum de 3 microseconds, imposée par l'incertitude introduite par l'exécution, par le microprocesseur, de la boucle d'attente de la transition du signal de synchronisation. Au terme de la temporisation une demande de prise du bus d'auto-allocation est faite et le résultat, bus pris ou non par la station, est vérifié (état de la bascule 17 transmis par la ligne d'état 14 et état du bus transmis par la ligne d'état du bus 11). Si le bus est pris par la station, suite à sa demande, la liaison multiplex d'émission Lib est allouée à la station qui émettra son message dès réception du message de consultation du groupe émis par la station principale. En effet dans le groupe le message de consultation est diffusé à toutes les stations, mais seule la station qui a pris le bus pourra émettre, puisque dans les autres stations la demande de prise aura été négative, le microprocesseur de chacune d'elles ayant été informé, par la ligne d'état du bus 11 et la ligne d'état 14, de l'insuccès de la demande de prise du bus d'auto-allocation. Lorsque le résultat d'une demande de prise du bus d'auto-allocation est négatif, une seconde temporisation est armée au terme de laquelle le processus indiqué ci-dessus est réitéré (attente de transition du signal de synchronisation, ... etc.).

**Revendications**

1. Procédé de sélection d'une station d'un ensemble de stations dialoguant avec une station principale d'une unité de commande (UC) comprenant également un réseau de connexion (RCX) et une base de temps (BT), le réseau de connexion étant relié à un central et à la station principale (SP) elle-même reliée à la base de temps, les stations constituant des groupes reliés chacun au réseau de connexion par une liaison d'émission (Lib) acheminant des messages émis par les stations et par une liaison de réception (Lia) acheminant des messages émis par la station principale, lesdites liaisons d'émission et de réception étant constitués chacune par au moins une ligne multiplex ayant une voie temporelle réservée au dialogue dans une trame répétitive, caractérisé par le fait que dans chaque groupe les stations reçoivent un signal de synchronisation délivré par la base de temps, que dans chaque groupe chaque station désirant émettre des informations dans la voie réservée de la liaison multiplex d'émission effectue à l'intérieur du groupe une demande de réservation de cette voie d'émission reliant le groupe à la station principale après qu'un temps fonction de son adresse dans le groupe se soit écoulé à partir de la réception du signal de synchronisation, que la station principale consulte successivement chaque groupe de stations par émission d'un message de consultation diffusé à toutes les stations du groupe consulté, et que dans le groupe consulté la station qui a obtenu la réservation de la voie réservée émet un message dès réception du message de consultation.

2. Dispositif de sélection d'une station d'un ensemble de stations dialoguant avec une station principale pour la mise en oeuvre du procédé selon la revendication 1, la station principale (SP) faisant partie d'une unité de commande (UC) comprenant également un réseau de connexion (RCX) et une base de temps (BT), le réseau de connexion étant relié à un central et à la station principale, les stations constituant des groupes reliés chacun au réseau de connexion par une liaison d'émission (Lib) acheminant des messages émis par les stations et par une liaison de réception (Lia) acheminant des messages émis par la station principale, lesdites liaisons d'émission et de réception étant constituées chacune par au moins une ligne multiplex ayant une voie temporelle réservée au dialogue dans une trame répétitive, caractérisée par le fait que chaque groupe comporte un bus d'auto-allocation (BA) relié aux stations et une liaison d'horloge et de synchronisation (LS) reliée aux stations et acheminant un signal d'horloge et de synchronisation délivré par la base de temps, et que chaque station comporte un dispositif d'allocation (9) relié au bus d'auto-allocation (BA) et à un microprocesseur (4) de la station.

3. Dispositif de sélection d'un ensemble de stations selon la revendication 2, caractérisé par le fait que le bus d'auto-allocation (BA) est relié à travers une résistance (R) à une polarité d'une source de tension continue (V) dont l'autre polarité est à la masse, et que le dispositif d'allocation (9) comporte une porte ET (16), une bascule (17), un premier et un deuxième transistors (19, 20) en série, et une résistance (18), la sortie de la porte ET étant reliée à l'entrée de la bascule dont la sortie est reliée à travers la résistance (18) à la base du premier transistor (19), le bus d'auto-allocation (BA) étant relié au collecteur du premier transistor (19) et à une entrée de la porte (ET), le microprocesseur étant relié par une ligne d'état de bus (11) au bus d'auto-allocation, une ligne de demande (12) à une autre entrée de la porte ET, une ligne de libération (13) à une entrée de remise à zéro de la bascule, une ligne d'état (14) à la sortie de la bascule et une ligne de blocage (15) à la base du deuxième transistor (20).

4. Dispositif selon la revendication 2, caractérisée par le fait que l'unité de commande (UC) est reliée à des groupes locaux (G2 ... Gn) et que la liaison d'horloge et de synchronisation de chaque groupe est reliée directement à la base de temps.

5. Dispositif selon la revendication 2, caractérisée par le fait que l'unité de commande (UC) est reliée à des groupes distants et que chaque groupe distant (G1) comporte un dispositif de récupération de rythme (RR) reliée d'une part aux liaisons d'émission et de réception reliant le groupe à l'unité de commande et d'autre part à la liaison d'horloge et de synchronisation dudit groupe distant.

**Patentansprüche**

1. Verfahren zur Auswahl einer Station aus einer Gesamtheit von Stationen, die mit einer Hauptstation einer Steuereinheit (UC) in Dialog stehen, welche ein Vermittlungsnetz (RCX) und eine Zeitbasis (BT) umfaßt, wobei das Vermittlungsnetz an eine Zentrale und an die Hauptstation angeschlossen ist, die ihrerseits mit der Zeitbasis verbunden ist, wobei die Stationen Gruppen bilden, die an das Schaltnetz über eine Sendeverbindung (Lib) angeschlossen sind, welche die von den Stationen gesendeten Informationen überträgt, und über eine Empfangsverbindung (Lia), welche die von der Hauptstation gesendeten Informationen überträgt; und wobei die Sende- und Empfangsverbindungen jeweils aus mindestens einer Multiplexleitung bestehen, die einen für den Dialog reservierten Zeitkanal in einem sich wiederholenden Rahmen aufweist, dadurch gekennzeichnet, daß in jeder Gruppe die Stationen ein von der Zeitbasis geliefertes Synchronisationssignal empfangen; daß in jeder Gruppe jede Station, welche Informationen über den reservierten Kanal der Multiplexleitung zu senden wünscht, innerhalb der Gruppe eine Reservierungsanfrage für diesen Sendekanal abgibt, welche die Gruppe mit der Hauptstation verbindet, sobald eine von ihrer Adresse in der Gruppe abhängige Zeit seit Empfang des Synchronisationssignals abgelaufen ist, daß die Hauptstation nacheinander jede Gruppe von Stationen durch Aussendung einer Konsultationsnachricht befragt, welche allen Stationen der befragten Gruppe zugeleitet wird; und daß innerhalb der befragten Gruppe diejenige Station, die die Reservierung des reservierten Kanals erhalten hat, eine Meldung aussendet, sobald sie die Konsultationsanfrage empfangen hat.

2. Anordnung zur Auswahl einer Station aus einer Gesamtheit von Stationen, die mit einer Hauptstation in Dialog stehen, für die Durchführung des Verfahrens nach Anspruch 1, worin die Hauptstation (SP) Teil einer Steuereinheit (UC) ist, welche auch ein Vermittlungsnetz (RCX) und eine Zeitbasis (BT) umfaßt, wobei das Vermittlungsnetz an eine Zentrale und an die Hauptstation angeschlossen ist, die Stationen Gruppen bilden, die jeweils an das Vermittlungsnetz über eine Sendeverbindung (Lib) angeschlossen sind, welche die von den Stationen gesendeten Nachrichten überträgt, und über eine Empfangsverbindung (Lia), welche die von der Hauptstation gesendeten Nachrichten überträgt, und wobei die genannten Sende- und Empfangsverbindungen jeweils aus mindestens einer Multiplexleitung bestehen, die einen für den Dialog reservierten Zeitkanal in einem sich wiederholenden Rahmen aufweist, dadurch gekennzeichnet, daß jede Gruppe eine mit den Stationen verbundene Selbstzuweisungsschiene (BA) sowie eine mit den Stationen verbundene Takt- und Synchronisationsleitung (LS) aufweist, die ein von der Zeitbasis geliefertes Takt- und Synchronisationssignal überträgt, und daß jede Station eine Zuweisungsvorrichtung (9) aufweist, die an die Selbstzuweisungsschiene (BA) und an einen Mikroprozessor (43) der Station angeschlossen ist.

3. Anordnung zur Auswahl einer Gesamtheit von Stationen nach Anspruch 2, dadurch gekennzeichnet, daß die Selbstzuweisungsschiene (BA) über einen Widerstand (R) an einen Pol einer Gleichspannungsquelle (V) angeschlossen ist, deren anderer Pol and Erde liegt, und daß die Zuweisungsvorrichtung (9) ein UND-Tor (16), ein Flip-Fl0p (17), einen ersten und zweiten Transistor (19, 20) in Reihenschaltung, und einen Widerstand (18) aufweist, wobei der Ausgang des UND-Tores mit dem Eingang des Flip-Flops verbunden ist, dessen Ausgang über den Widerstand (18) an die Basis des ersten Transistors (19) geschaltet ist, wobei die Selbstzuweisungsschiene (BA) mit dem Kollektor des ersten Transistors (19) sowie mit einem Eingang des UND-Tores verbunden ist, der Mikroprozessor über eine Schienenzustandsleitung (11) mit der Selbstzuweisungsschiene verbunden ist, eine Anfrageleitung (12) an einen anderen Eingang des UND-Tores, eine Freigabeleitung (13) an einen Nullsetzungseingang des Flip-Flops, eine Zustandsleitung (14) an den Ausgang des Flip-Flops, und eine Sperrleitung (15) an die Basis des zweiten Transistors (20) angeschlossen ist.

4. Anordnung nach Anspruch 2, dadurch gekennzeichnet, daß die Steuereinheit (UC) mit örtlichen Gruppen (G2 ... Gn) verbunden ist und die Takt- und Synchronisationsleitung jeder Gruppe direkt an die Zeitbasis angeschlossen ist.

5. Anordnung nach Anspruch 2, dadurch gekennzeichnet, daß die Steuereinheit (UC) an entfernte Gruppen angeschlossen ist und jede entfernte Gruppe (G1) eine Taktwiedergewinnungsvorrichtung (RR) aufweist, welche zum einen an die Sende- und Empfangsverbindungen, die die Gruppe mit der Steuereinheit verbinden, und zum anderen an die Takt- und Synchronisationsleitung der entfernten Gruppe angeschlossen ist.

**Claims**

1. A method of selecting one station from a set of stations dialoging with a main station of a control unit (UC) comprising a switching network (RCX) and a time base (BT), the switching network being connected to an exchange and to the main station (SP), the latter being in turn connected with the time base, the stations constituting groups being each connected to the switching network by a transmit link (Lib) carrying the messages sent by the stations, and by a receive link (Lia) carrying the messages sent by the main station, wherein the said transmit and receive links are constituted each of at least one multiplex line having a time slot in a repetitive frame reserved for dialog, characterized in that the stations in each group receive a synchronization signal delivered by the time base; each station in each group which requires to send information in the reserved time slot of the transmit multiplexed link effects a request internal to the group for reservation of this time slot connecting the group to the main station after a time period, depending on its address within the group, has elapsed since reception of the synchronization signal, the main station consults each group of stations in succession by sending a consultation message to all stations in the group, and the station in the consulted group which has reserved the reserved time slot sends its message as soon as it receives the consultation message.

2. A system of selecting one station from a set of stations dialoging with a main station, adapted to implement the method according to claim 1, wherein the main station (SP) being part of a control unit (UC) comprising also a switching network (RCX) and a time base (BT), the switching network being linked up with an exchange and the main station, the stations constituting groups each being connected to the switching network by a transmit link (Lib), carrying the messages sent by the stations, and by a receive link (Lia), carrying the messages sent by the main station, the said transmit and receive links being constituted each of at least one multiplex line having a time slot in a repetitive frame reserved for dialog, characterized in that each group comprises a self-assigned bus (BA) connected to the stations and a clock and synchronization link (LS) connected to the stations and carrying a clock and synchronization signal delivered by the time base, and that each station comprises an assignment system (9) connected to the self-assigned bus (BA) and to a microprocessor (4) of the station.

3. A system of selecting a set of stations according to claim 2, characterized in that the self-assigned bus (BA) is connected via a resistor (R) to one polarity of a DC voltage source (V) having the other polarity grounded, that the assignment system (9) comprises an AND gate (16), a flip-flop (17), series-connected first and second transistors (19, 20) and a resistor (18), that the output of said AND gate is connected to the input of said flip-flop, the output of which is connected via the resistor (18) to the base of the first transistor (19), the self-assigned bus (BA) being connected to the collector of the first transistor (19) and to an input of the AND gate, and that the microprocessor is connected by a bus status line (11) to the self-assigned bus, by a request line (12) to another input of the AND gate, by a release line (13) to a zero reset input of the flip-flop, by the status line to the output of the flip-flop and by a disable line (15) to the base of the second transistor (20).

4. A system according to claim 2, characterized in that the control unit (UC) is connected to the local groups (G2 ... Gn) and that the clock and synchronization link of each local group is directly connected to the time base.

5. A system according to claim 2, characterized in that the control unit (UC) is connected to remote groups (G1) and that each remote group comprises a timing signal recovery system (RR) connected on the one side to the transmit-receive connection linking the group with the control unit, and on the other side with the clock and synchronization link.

FIG.1

# FIG. 2

FIG.3

FIG.4

# FIG.5

```
            ┌──────────────┐
            │    REPOS      │
            └──────┬───────┘
          ┌────────┴────────┐
    ┌─────┴─────┐     ┌─────┴──────┐
    │ EVENEMENT │     │ DEBORDEMENT│
    │A TRANSMETTRE│   │TEMPORISATION│
    └─────┬─────┘     └─────┬──────┘
          └────────┬────────┘
                 ◇ ATTENTE
                   TRANSITION ──/──┐
                   SV              │
                   │               │
            ┌──────┴───────┐      │
            │ CALCUL DELAI │      │
            │   Nxt µs      │      │
            └──────┬───────┘      │
                   │◄──────────────────────┐
                ◇ FIN DE DELAI ──/──┐      │
                   │                │      │
          ┌────────┴──────┐  ┌──────┴──────┐
          │   TENTATIVE   │  │ DECREMENTER │
          │   DE PRISE    │  │  LE DELAI   │
          └────────┬──────┘  └─────────────┘
                ◇ BUS PRIS ──/──┐
                   │            │
            ┌──────┴───────┐ ┌──┴──────────┐
            │    PRISE     │ │  ARMEMENT   │
            └──────────────┘ │TEMPORISATION│
                             └──────┬──────┘
                             ┌──────┴──────┐
                             │   REPOS     │
                             └─────────────┘
```

4